# EUROPÄISCHE PATENTSCHRIFT

(11) **EP 3 966 467 B1**
(45) Veröffentlichungstag und Bekanntmachung des Hinweises auf die Patenterteilung: **26.04.2023**
(21) Anmeldenummer: 20724084.7
(22) Anmeldetag: 05.05.2020
(51) Int. Cl.: F16D 63/00, F16D 65/12, F16D 71/00, E05D 7/086

(54) **BREMSVORRICHTUNG, VERFAHREN ZUR STEUERUNG DER BREMSVORRICHTUNG**
BRAKE SYSTEM, METHOD FOR CONTROLLING SAID BRAKE SYSTEM
SYSTÈME DE FREINAGE, MÉTHODE DE COMMANDE DE CE SYSTÈME DE FREINAGE

(30) Priorität: 08.05.2019 DE 102019112005
(43) Veröffentlichungstag der Anmeldung: 16.03.2022
(73) Patentinhaber: STABILUS GmbH, 56070 Koblenz (DE)
(72) Erfinder: REIF, Thomas, 56330 Kobern-Gondorf (DE); HILLEN, Jörg, 56283 Nörtershausen (DE); RITTER, Andreas, 56206 Hilgert (DE); OSTER, Peter, 56814 Bremm (DE)
(74) Vertreter: Bernsmann, Falk
(86) Internationale Anmeldenummer: PCT/EP2020/062438
(87) Internationale Veröffentlichungsnummer: WO 2020/225257

(56) Entgegenhaltungen:
- WO-A1-99/61814
- WO-A1-2017/010496
- US-A1- 2018 128 026

## Beschreibung

### Technisches Gebiet

Die Erfindung betrifft eine Bremsvorrichtung zum Abbremsen einer Drehbewegung einer Welle um ihre Längsachse, wobei die Welle in einer Drehrichtung und in einer der Drehrichtung entgegengesetzten Gegendrehrichtung um die Längsachse drehbar gelagert ist. Die Erfindung betrifft außerdem ein Verfahren zur Einstellung des von der Bremsvorrichtung bewirkten Bremsmoments und/oder Gegenbremsmoments.

### Stand der Technik

Aus dem Stand der Technik sind Antriebssysteme, insbesondere zum elektromechanischen Öffnen und Schließen, beispielsweise von Fahrzeugtüren, Heckklappen oder Motorhauben, bekannt. Das Antriebssystem kann dabei einerseits bei einem manuellen Öffnen, Offenhalten und Schließen der Tür unterstützen und / oder die Tür eigenständig öffnen und schließen. Die Kraft eines Elektromotors wird beispielsweise in einem Linearantrieb über eine Gewindespindel an die Tür übertragen. Weiterhin werden solche Antriebssysteme auch in verstellbaren Möbeln, wie beispielsweise höhenverstellbaren Tischen, verwendet.

Solche Antriebssysteme umfassen in der Regel eine Bremsvorrichtung. Die Bremsvorrichtung hat dabei mehrere Funktionen. Zum einen ermöglicht sie zum Beispiel eine recht schwere Heckklappe eines Fahrzeugs in einer (beliebigen) Winkelposition zu halten und andererseits eine gleichmäßigere Bewegung des Antriebssystems. Weiterhin können Beschädigungen, beispielsweise an einer Heckklappe, beim Schließen durch zu hohe Beschleunigungskräfte (resultierend beispielsweise aus einer Handkraft eines Benutzers und der auf die Heckklappe wirkenden Schwerkraft) durch die entgegengesetzte Bremskraft bzw. das resultierende Bremsmoment vermieden werden.

In Fahrzeugen erfordern Seiten-Schwenktüren, Seiten-Schiebetüren und Heckklappen, speziell in Abhängigkeit der Fahrzeuglage bezüglich Steigung / Neigung und/oder Hanglage, ein unterschiedliches Bremsmoment in ihrer Öffnungs-und Schließ-Richtung, um die jeweilige Last zu halten, bzw. eine Bewegung, in jede Bewegungsrichtung komfortabel mit möglichst niedrigen manuellen und/oder elektrischen Antriebsmomenten zu realisieren. Diese je nach Fahrzeuglage unterschiedlichen Bremsmomente sind der Schwerkraft geschuldet, welche ein zusätzliches Schließmoment (oder Öffnungsmoment) aus der Gewichtskraft der Tür oder Klappe generiert je nach Neigung und Schwerpunktslage der Tür oder Klappe zur zugehörigen Scharnierachse im Raum.

Grundsätzlich muss aber im Stand der Technik eine so große Bremskraft gewählt werden, dass die jeweilige Last auch entgegen der größten in allen relevanten Fahrzeuglagen möglichen Schließkraft (infolge der Schwerkraft) in der gewünschten Position gehalten werden kann.

Entsprechendes gilt bei einem belasteten höhenverstellbaren Tisch, damit auch bei der größten zu erwartenden Belastung des Tisches keine unkontrollierte Bewegung der Tischplatte nach unten erfolgt.

Dies hat jeweils den Nachteil, dass in der entgegengesetzten Bewegungsrichtung (z.B. Heckklappe öffnen oder Tisch hochfahren) und in unproblematischeren Fahrzeuglagen (oder bei niedriger Tischbelastung) regelmäßig eine zu großes Bremsmoment wirkt, was eine Bewegung schwergängig macht und dadurch eine manuelle Bedienung kraftaufwändig und unkomfortabel gestaltet bzw. den Energieverbrauch des Antriebssystems für eine motorisierte Bewegung im Mittel stark erhöht. Ferner werden durch ein großes Bremsmoment der Verschleiß der Bremsvorrichtung und des Antriebssystems erhöht und somit die Lebensdauer der Bremsvorrichtung und des Antriebssystems deutlich reduziert.

Als Stand der Technik können die folgenden Dokumente US 2018/128026 A1, WO 99/61814 A1, WO 2017/010496 A1 zitiert werden.

### Technische Aufgabe

Die Aufgabe der Erfindung ist es, eine kostengünstige und langlebige Bremsvorrichtung der eingangs genannten Art und eine Verfahren zur Steuerung der Bremsvorrichtung bereitzustellen, die einen sicheren, zuverlässigen und effizienten Betrieb, insbesondere eines Antriebssystems mit der Bremsvorrichtung, ermöglichen.

### Technische Lösung

Der Gegenstand der vorliegenden Erfindung stellt eine Bremsvorrichtung gemäß Anspruch 1 bereit, die die technische Aufgabe löst. Ebenso wird die Aufgabe durch ein Verfahren gemäß Anspruch 12 gelöst. Vorteilhafte Ausgestaltungen ergeben sich aus den abhängigen Ansprüchen.

### Beschreibung der Ausführungsarten

Eine erfindungsgemäße Bremsvorrichtung ist zum Abbremsen einer Drehbewegung einer Welle um ihre Längsachse ausgelegt, wobei die Welle in einer Drehrichtung und in einer der Drehrichtung entgegengesetzten Gegendrehrichtung um die Längsachse drehbar gelagert ist. Die Welle kann beispielsweise mechanisch mit einer Antriebswelle, insbesondere einer Antriebsspindel, eines Antriebssystems verbunden sein. Das Antriebssystem ist beispielsweise ein Linearantrieb, wobei die Bewegungsachse insbesondere entlang einer Antriebsspindel des Linearantriebs verläuft, die im einfachsten Fall parallel, insbesondere identisch, zu der Längsachse der Welle sein kann.

Die Bremsvorrichtung umfasst vorzugsweise zumindest eine über einen Freilauf mit der Welle verbundene Bremsscheibe, die dazu eingerichtet ist, mit einer Anlaufscheibe zur Erzeugung eines Bremsmomentes auf die Welle zusammenzuwirken, wobei der Freilauf die Bremsscheibe bei einer Drehung der Welle in der Drehrichtung mit der Welle koppelt und bei einer Drehung der Welle in der Gegendrehrichtung von der Welle entkoppelt.

Die Bremsscheibe und die Anlaufscheibe können mechanisch, insbesondere durch Reibung aneinander, zur Erzeugung des Bremsmoments zusammenwirken. Die Bremsscheibe und die Anlaufscheibe können magnetisch, insbesondere als Hysteresebremse, zur Erzeugung des Bremsmoments zusammenwirken. Die Bezeichnung "Bremsscheibe" oder "Anlaufscheibe" wird erfindungsgemäß für beliebig geformte Körper verwendet, die zur Erzeugung des Bremsmoments zusammenwirken. In einer besonders einfach herzustellenden Ausgestaltung sind diese Körper scheibenförmig oder ringförmig.

Die Bremsvorrichtung umfasst vorzugsweise zumindest eine über einen Gegenfreilauf mit der Welle verbundene Gegenbremsscheibe, die dazu eingerichtet ist, mit einer Gegenanlaufscheibe zur Erzeugung eines Gegenbremsmomentes auf die Welle zusammenzuwirken, wobei der Gegenfreilauf die Gegenbremsscheibe bei einer Drehung der Welle in der Gegendrehrichtung mit der Welle koppelt und bei einer Drehung der Welle in der Drehrichtung von der Welle entkoppelt.

Die Bremsvorrichtung umfasst vorzugsweise zumindest eine Einstellvorrichtung zur zueinander gegenläufigen Einstellung des Bremsmoments und des Gegenbremsmoments.

Die Bremsvorrichtung ist also dazu eingerichtet, ein Bremsmoment und ein Gegenbremsmoment entgegen Drehbewegungen der Welle in beiden Richtungen um die Längsachse bereitzustellen, wobei die Beträge von Bremsmoment und Gegenbremsmoment einstellbar sind. Bremsmoment und Gegenbremsmoment können mit dieser Lösung insbesondere unterschiedlich voneinander eingestellt werden, beispielsweise so, dass eine Bewegung einer Heckklappe oder Tischplatte in Richtung der Schwerkraft stärker gebremst wird als eine Bewegung entgegen der Schwerkraft. Dadurch wird der Energieverbrauch eines Antriebssystems für die Heckklappe oder Tischplatte reduziert und die Lebensdauer des Antriebssystems und der Bremsvorrichtung erhöht.

Das Bremsmoment und das Gegenbremsmoment sind insbesondere im Betrieb der Bremsvorrichtung einstellbar, erlauben also eine Anpassung an die jeweilige Situation (bspw. eine Fahrzeuglage im Gravitationsfeld oder die Tischlast auf eine höhenverstellbare Tischplatte).

Zum Ausgleich von Laständerungen auf einen von der Bremsvorrichtung gebremsten Bewegungsabschnitt, beispielsweise eine Heckklappe oder eine verstellbare Tischplatte, ist es in der Regel vorteilhaft, das Bremsmoment und das Gegenbremsmoment zueinander gegenläufig einzustellen, damit einerseits der Bewegungsabschnitt nicht unkontrolliert in Richtung der Laständerung beschleunigt wird und andererseits eine möglichst leichtgängige manuelle oder automatische Bewegung entgegen der Laständerung möglich ist.

Eine "zueinander gegenläufige Einstellung" bedeutet, dass in einem einzigen Verstellvorgang, vorzugsweise aber nicht zwangsläufig gleichzeitig, das Bremsmoment erhöht und das Gegenbremsmoment verringert werden kann oder umgekehrt einstellbar sind.

Beispielsweise kann die Einstellvorrichtung eine gemeinsame Steuereinheit zur gegenläufigen Einstellung des Bremsmoments und des Gegenbremsmoments, beispielsweise durch eine, insbesondere motorisierte, gegenläufige Einstellung eines Abstands oder eines Anpressdrucks zwischen Anlaufscheibe und Bremsscheibe einerseits sowie Gegenanlaufscheibe und Gegenbremsscheibe andererseits, umfassen.

Die Einstellvorrichtung umfasst vorzugsweise eine Verbindungsvorrichtung, wobei die Verbindungsvorrichtung die Anlaufscheibe mit der Gegenanlaufscheibe mechanisch, insbesondere starr oder elastisch, verbindet, und entlang einer Verbindungsachse zwischen der Bremsscheibe und der Gegenbremsscheibe über eine Verschiebungsstrecke verschiebbar gelagert ist. Durch die Verbindungsvorrichtung können die Anlaufscheibe und die Gegenanlaufscheibe gemeinsam entlang der Verbindungsachse verschoben werden, um auf besonders einfache Weise gleichzeitig einen Abstand oder einen Anpressdruck zwischen Anlaufscheibe und Bremsscheibe einerseits sowie Gegenanlaufscheibe und Gegenbremsscheibe andererseits gegenläufig zueinander einzustellen. Die Verbindungsvorrichtung erlaubt daher eine besonders einfache zueinander gegenläufigen Einstellung des Bremsmoments und des Gegenbremsmoments.

Die Verbindungsvorrichtung kann beispielsweise innerhalb einer Verschiebungsstrecke entlang der Welle verschiebbar sein. Je nach Ausführungsform kann es einen Abschnitt der Verschiebungsstrecke geben, in dem Bremsmoment und Gegenbremsmoment gleichzeitig durch die Verschiebung der Verbindungsvorrichtung einstellbar sind.

Die Verbindungsvorrichtung ist vorzugsweise zwischen der Anlaufscheibe und der Gegenanlaufscheibe angeordnet, wobei zwischen der Verbindungsvorrichtung und der Anlaufscheibe eine Feder zum Anpressen der Anlaufscheibe an die Bremsscheibe angeordnet ist und/oder zwischen der Verbindungsvorrichtung und der Gegenanlaufscheibe eine Gegenfeder zum Anpressen der Gegenanlaufscheibe an die Gegenbremsscheibe angeordnet ist. Wird die Verbindungsvorrichtung entlang der Verbindungsachse verschoben, kann dadurch eine Spannung der Feder und/oder der Gegenfeder zueinander gegenläufig eingestellt werden. Insbesondere kann gleichzeitig die Spannung der Feder erhöht und die Spannung der Gegenfeder verringert werden oder umgekehrt. Die Spannung der Feder und/oder Gegenfeder kann einen Anpressdruck der Anlaufscheibe an die Bremsscheibe und/oder der Gegenanlaufscheibe an die Gegenbremsscheibe einstellen. Insgesamt können somit durch eine Verschiebung der Verbindungsvorrichtung auf einfache Weise das Bremsmoment und das Gegenbremsmoment zueinander gegenläufig eingestellt werden.

Die Feder und/oder die Gegenfeder kann eine, insbesondere um die Welle angeordnete, beispielsweise koaxial um die Welle angeordnete, Spiralfeder sein.

Die Anlaufscheibe, die Gegenanlaufscheibe, die Bremsscheibe und die Gegenbremsscheibe sind vorzugsweise ringförmig um die Längsachse angeordnet, und die Verbindungsvorrichtung ist vorzugsweise hülsenförmig um die Längsachse angeordnet und entlang der Längsachse verschieblich gelagert. wobei die Anlaufscheibe und die Gegenanlaufscheibe zwischen der Bremsscheibe und der Gegenbremsscheibe und die Verbindungsvorrichtung zwischen der Anlaufscheibe und der Gegenanlaufscheibe angeordnet sind. Durch eine, insbesondere konzentrische, Anordnung der genannten Komponenten um die Längsachse wird ein besonders platzsparender Aufbau der Bremsvorrichtung erreicht, und es kann ein von einem Drehwinkel der Welle um die Längsachse unabhängiges Bremsmoment und Gegenbremsmoment bewirkt werden, wodurch Welle und Bremsvorrichtung gleichmäßig belastet werden und der Verschleiß reduziert wird.

Die Bremsvorrichtung umfasst vorzugsweise einen, insbesondere elektrischen, Bremsmoment-Einstellantrieb zur Verschiebung der Verbindungsvorrichtung entlang der Verbindungsachse, wodurch der Betrag von Bremsmoment und Gegenbremsmoment motorisiert einstellbar sind. Der Bremsmoment-Einstellantrieb erlaub insbesondere eine (automatische) Verstellung des Bremsmoments und Gegenbremsmoments im Betrieb der Bremsvorrichtung, beispielsweise in Reaktion auf Sensordaten (Lastsensor, Lagesensor etc.). Der Bremsmoment-Einstellantrieb kann einen Rotationsantrieb mit einer Einstellwelle umfassen, deren Rotationsachse beispielsweise parallel zur Längsachse der Welle verläuft.

Der Bremsmoment-Einstellantrieb kann über ein Getriebe, beispielsweise mit einem Stirnrad oder mehreren Stirnrädern, mit der Verbindungsvorrichtung mechanisch verbunden sein und diese entlang der Verbindungsachse zwischen den Bremsscheiben verschieben. Das Getriebe ist vorzugsweise selbsthemmend ausgestaltet, beispielsweise durch ein selbsthemmendes Steigungsgewinde zur Verschiebung der Verbindungsvorrichtung, damit die Verbindungsvorrichtung sich im Betrieb der Bremsvorrichtung nicht unkontrolliert verschiebt, wodurch sich das Bremsmoment und das Gegenbremsmoment unkontrolliert verändern würden.

Es ist bevorzugt, wenn bei der Verschiebung der Verbindungsvorrichtung in einem Bereich der Verschiebungsstrecke:
- nur eine Einstellung entweder des Bremsmoments oder des Gegenbremsmoments bewirkt wird während das jeweils andere Moment konstant bleibt,
   und / oder
- das Bremsmoment erhöht wird und gleichzeitig das Gegenbremsmoment verringert wird oder umgekehrt,
   und / oder
- weder das Bremsmoment noch das Gegenbremsmoment.

Es ist möglich, dass in verschiedenen Bereichen der Verschiebungsstrecke jeweils einer der drei genannten Fälle auftritt, wobei nicht jeder Fall in jeder Ausführungsform realisiert sein muss. Es ist beispielsweise möglich, dass über die gesamte Verschiebestrecke beide Momente gleichzeitig eingestellt werden. Es ist auch möglich, dass in jedem Bereich der Verschiebestrecke jeweils nur eines von beiden Momente einstellbar ist, wobei die Verschiebestrecke jeweils zumindest einen Bereich umfassen kann, in dem das Bremsmoment einstellbar ist, und einen, sich beispielsweise an den Bereich anschließenden, Gegenbereich, in dem das Gegenbremsmoment einstellbar ist. Ebenso ist es möglich, dass es (beispielsweise einen mittleren) Bereich der Verschiebestrecke gibt, in dem sich keines der Momente bei einer Verschiebung der Verbindungsvorrichtung verändert.

Die Bremsvorrichtung umfasst vorzugsweise einen Anschlag für die Anlaufscheibe, wobei der Anschlag ein Zusammenwirken der Anlaufscheibe mit der Bremsscheibe zur Erzeugung eines minimalen Bremsmoments unabhängig von einer Einstellung der Einstellvorrichtung bewirkt, und/oder einen Gegenanschlag für die Gegenanlaufscheibe, wobei der Gegenanschlag ein Zusammenwirken der Gegenanlaufscheibe mit der Gegenbremsscheibe zur Erzeugung eines minimalen Gegenbremsmoments unabhängig von einer Einstellung der Einstellvorrichtung bewirkt.

Der Anschlag verhindert beispielsweise, dass sich ein Abstand zwischen der Anlaufscheibe und der Bremsscheibe zu stark vergrößert oder eine Anpresskraft der Anlaufscheibe an die Bremsscheibe zu stark verringert, um das minimale Bremsmoment zu bewirken, wenn sich die Verbindungsvorrichtung von der Bremsscheibe entfernt. Insbesondere kann der Anschlag verhindern, dass sich eine Federabstützung einer zwischen der Verbindungsvorrichtung und der Anlaufscheibe angeordneten Feder zu weit von der Anlaufscheibe entfernt, um durch eine Spannung der Feder einen ausreichenden Anpressdruck der Anlaufscheibe an die Bremsscheibe zu bewirken. Der Gegenanschlag kann analog zu dem Anschlag ausgestaltet sein und wirken.

Je nach Anwendung kann es wünschenswert sein, unabhängig von der Einstellvorrichtung ein minimales Bremsmoment und/oder Gegenbremsmoment vorzusehen, beispielsweise um eine maximale Beschleunigung eines von der Bremsvorrichtung abgebremsten Bewegungsabschnitts, zum Beispiel einer Heckklappe oder einer Tischplatte, festzulegen, um eine Gefahr von Personen- oder Sachschäden durch eine zu hohe Beschleunigung und daraus resultierend hohe Aufprallenergie des Bewegungsabschnitts zu minimieren. Durch den Anschlag und/oder Gegenanschlag wird das minimale Bremsmoment und/oder Gegenbremsmoment insbesondere auch bei einer Fehlbedienung oder Fehlfunktion der Einstellvorrichtung bereitgestellt.

Vorzugsweise umfasst die Bremsvorrichtung eine Steuereinheit zur automatischen Einstellung des Bremsmoments und/oder des Gegenbremsmoments und eine Anzahl von mit der Steuereinheit kommunikativ verbundenen Sensoren zur Bestimmung eines in Drehrichtung oder Gegendrehrichtung auf die Welle wirkenden Lastmoments. Das Lastmoment kann beispielsweise aus einer Gewichtskraft eines von der Bremsvorrichtung abgebremsten Bewegungsabschnitts, beispielsweise einer Heckklappe oder einer Tischplatte, resultieren.

Alternativ oder ergänzend zu der Steuereinheit und den Sensoren kann die Bremsvorrichtung eine Anzahl von Schnittstellen zur kommunikativen Verbindung mit einer externen Steuereinheit und/oder einer Anzahl von externen Sensoren umfassen.

Die Steuereinheit kann mit Hilfe der Sensoren das Bremsmoment und/oder Gegenbremsmoment im Betrieb der Bremsvorrichtung situationsgerecht anpassen, beispielsweise kann das Bremsmoment und/oder Gegenbremsmoment so eingestellt werden, dass es das Lastmoment genau ausgleicht oder um eine Sicherheitsmarge höher ist als das Lastmoment. Dadurch wird eine unkontrollierte Bewegung eines von der Bremsvorrichtung abgebremsten Bewegungsabschnitts, beispielsweise durch die Schwerkraft, zuverlässig verhindert, während eine erwünschte Bewegung weiterhin mit geringem Energieaufwand möglich ist.

Die Sensoren können mindestens einen Lastsensor zur Bestimmung einer auf einen von der Bremsvorrichtung abgebremsten Bewegungsabschnitt Last umfassen. Bei bekannter Geometrie des Bewegungsabschnitts kann die Steuereinheit aus der Last das auf die Welle bewirkte Lastmoment berechnen und das Bremsmoment und/oder Gegenbremsmoment entsprechend, insbesondere zum Ausgleich des Lastmoments, einstellen. Dies ist insbesondere für die Verwendung in Tischen mit höhenverstellbarer Tischplatte vorteilhaft, um ein optimales Bremsmoment und/oder Gegenbremsmoment für die jeweilige auf die Tischplatte wirkende Last und für die jeweilige Bewegungsrichtung zu bestimmen und einzustellen.

Die Sensoren können mindestens einen Lagesensor zur Bestimmung einer räumlichen Lage eines von der Bremsvorrichtung abgebremsten Bewegungsabschnitts in einem Gravitationsfeldumfassen. Bei bekannten Abmessungen und bekannter Masseverteilung des Bewegungsabschnitts kann die Steuereinheit aus der Lage das durch die Gravitationskraft auf die Welle bewirkte Lastmoment berechnen und das Bremsmoment und/oder Gegenbremsmoment entsprechend, insbesondere zum Ausgleich des Lastmoments, einstellen. Dies ist insbesondere für die Verwendung in Fahrzeugen vorteilhaft um ein optimales Bremsmoment und/oder Gegenbremsmoment für die jeweilige Lage des Bewegungsabschnitts, beispielsweise einer Heckklappe des Fahrzeugs, z.B. wenn das Fahrzeug an einem Hang oder am Rand einer gewölbten Fahrbahn parkt, zu bestimmen und einzustellen.

Ein erfindungsgemäßes Antriebssystem zum Antrieb einer Drehbewegung einer Welle in einer Drehrichtung und/oder in einer der Drehrichtung entgegengesetzten Gegendrehrichtung um ihre Längsachse umfasst zumindest eine erfindungsgemäße Bremsvorrichtung zum Abbremsen einer Drehbewegung der Welle in der Drehrichtung und in der Gegendrehrichtung.

Die erfindungsgemäße Aufgabe wird auch durch eine Vorrichtung, insbesondere ein Fahrzeug oder ein Möbelstück, mit einem Bezugsabschnitt und einem Bewegungsabschnitt gelöst. Die Vorrichtung umfasst mindestens ein erfindungsgemäßes Antriebssystem nach einem der vorstehenden Ansprüche zum Antrieb einer Bewegung des Bewegungsabschnitts relativ zu dem Bezugsabschnitt.

Wenn die Vorrichtung ein Fahrzeug ist, kann der Bezugsabschnitt beispielsweise eine Karosserie des Fahrzeugs und/oder der Bewegungsabschnitt eine Tür, Motorhaube, Heckklappe oder Gepäckraumklappe des Fahrzeugs umfassen.

Das Möbelstück kann beispielsweise ein Tisch oder ein Stuhl sein, wobei der Bezugsabschnitt zumindest einen Fuß des Möbelstücks und der Bewegungsabschnitt eine höhenverstellbare Tischplatte oder Sitzfläche des Möbelstücks umfassen kann. Ein erfindungsgemäßer Tisch mit höhenverstellbarer Tischplatte erlaubt es beispielsweise, gegen ein Absenken der Tischplatte ein Bremsmoment einzustellen, das höher ist als ein Gegenbremsmoment gegen ein Anheben der Tischplatte. Dadurch werden der Energieverbrauch zum Anheben der Tischplatte reduziert und die Lebensdauer der Bremsvorrichtung und des Antriebssystems erhöht.

Eine zur Erfindung alternative Ausgestaltung der Vorrichtung als Möbelstück umfasst ein zur Erfindung alternatives Antriebssystem zum Antrieb einer Bewegung des Bewegungsabschnitts des Möbelstücks relativ zu dem Bezugsabschnitt des Möbelstücks. Das alternative Antriebssystem zum Antrieb einer Drehbewegung einer Welle in einer Drehrichtung und/oder in einer der Drehrichtung entgegengesetzten Gegendrehrichtung um ihre Längsachse umfasst zumindest eine zur Erfindung alternative Bremsvorrichtung zum Abbremsen einer Drehbewegung der Welle zumindest in der Drehrichtung.

Die alternative Bremsvorrichtung umfasst zumindest eine über einen Freilauf mit der Welle verbundene Bremsscheibe, die dazu eingerichtet ist, mit einer Anlaufscheibe zur Erzeugung eines Bremsmomentes auf die Welle zusammenzuwirken, wobei der Freilauf die Bremsscheibe bei einer Drehung der Welle in der Drehrichtung mit der Welle koppelt und bei einer Drehung der Welle in der Gegendrehrichtung von der Welle entkoppelt, und zumindest eine Einstellvorrichtung zur Einstellung des Bremsmoments.

Vorzugsweise erzeugt die alternative Bremsvorrichtung kein Gegenbremsmoment zum Abbremsen einer Drehbewegung der Welle in der Gegendrehrichtung. "Kein Gegenbremsmoment" ist hier nicht als exakt null zu verstehen, da auch der Freilauf ein geringes, aber nicht-verschwindendes, Gegenbremsmoment erzeugen kann.

Auf einen Bewegungsabschnitt eines Möbelstücks, beispielsweise auf eine höhenverstellbare Tischplatte oder eine höhenverstellbare Sitzfläche, gravitationsbedingt wirkende Lasten bewirken bei bestimmungsgemäßer Verwendung des Möbelstücks in der Regel nur Lastmomente in genau einer Richtung auf die Welle des Antriebssystems. Zum Ausgleich dieser Lastmomente ist es daher ausreichend, dass die alternative Bremsvorrichtung ein Bremsmoment aber kein Gegenbremsmoment erzeugt. Dadurch kann die alternative Bremsvorrichtung besonders einfach, insbesondere ohne Gegenfreilauf, Gegenbremsscheibe und Gegenanlaufscheibe, aufgebaut sein. Trotzdem kann das Bremsmoment im Betrieb der alternativen Bremsvorrichtung situationsgerecht angepasst werden.

Beispielsweise kann das Bremsmoment so eingestellt werden, dass es das Lastmoment genau ausgleicht oder um eine Sicherheitsmarge höher ist als das Lastmoment. Dadurch wird eine unkontrollierte Bewegung des Bewegungsabschnitts, beispielsweise durch die Gewichtskraft einer auf einer Tischplatte abgelegten Masse, zuverlässig verhindert, während eine erwünschte Bewegung weiterhin mit geringem Energieaufwand möglich ist.

Im Übrigen kann die alternative Bremsvorrichtung analog zu der erfindungsgemäßen Bremsvorrichtung ausgestaltet sein, woraus sich die dazu beschriebenen Vorteile ergeben.

Die Vorrichtung umfasst vorzugsweise eine Steuereinheit zur Einstellung des von der Bremsvorrichtung des Antriebssystems bewirkten Bremsmoments und eine Anzahl von mit der Steuereinheit kommunikativ verbundenen Sensoren zur Bestimmung eines in Drehrichtung oder Gegendrehrichtung der Welle des Antriebssystems auf die Welle wirkenden Lastmoments. Die Steuereinheit und/oder die Sensoren können in die Bremsvorrichtung integriert und/oder über eine Anzahl entsprechender Schnittstellen kommunikativ mit der Bremsvorrichtung verbunden sein.

Durch die Steuereinheit und die Sensoren ergeben sich die bereits zur Steuereinheit und den Sensoren der Bremsvorrichtung beschriebenen Vorteile und Ausgestaltungsmöglichkeiten. Die Sensoren umfassen vorzugsweise zumindest einen Lagesensor zur Bestimmung einer Lage des Bewegungsabschnitts in einem Gravitationsfeld.

Ein erfindungsgemäßes Verfahren zur Einstellung des von der Bremsvorrichtung der Antriebsvorrichtung einer erfindungsgemäßen Vorrichtung bewirkten Bremsmoments und/oder Gegenbremsmoments durch die Steuereinheit der Vorrichtung umfasst vorzugsweise ein Bestimmen eines in Drehrichtung oder Gegendrehrichtung der Welle des Antriebssystems auf die Welle wirkenden Lastmoments mit Hilfe der Sensoren der Vorrichtung.

Das Verfahren umfasst vorzugsweise ein Einstellen des von der Bremsvorrichtung bewirkten Bremsmoment und/oder Gegenbremsmoments, insbesondere nach dem Bestimmen, sodass das Lastmoment durch das dem Lastmoment entgegenwirkende Bremsmoment oder Gegenbremsmoment der Bremsvorrichtung ausgeglichen wird, wobei bevorzugt das Bremsmoment und das Gegenbremsmoment gegenläufig zueinander eingestellt werden.

Das Einstellen passt das Bremsmoment und/oder Gegenbremsmoment im Betrieb der Bremsvorrichtung situationsgerecht an, beispielsweise kann das Bremsmoment und/oder Gegenbremsmoment so eingestellt werden, dass es das Lastmoment genau ausgleicht oder um eine Sicherheitsmarge höher ist als das Lastmoment. Dadurch wird eine unkontrollierte Bewegung des von der Bremsvorrichtung abgebremsten Bewegungsabschnitts zuverlässig verhindert, während eine erwünschte Bewegung weiterhin mit geringem Energieaufwand möglich ist.

In einer Ausführungsform umfasst die Vorrichtung einen Tisch mit höhenverstellbarer Tischplatte und mindestens einem Lastsensor zur Bestimmung einer auf die Tischplatte wirkenden Last, wobei der Tisch eine Steuereinheit umfasst, die bei sinkender Last das Bremsmoment gegen eine Bewegung der Tischplatte nach unten verringert, und bei steigender Last das Bremsmoment gegen eine Bewegung der Tischplatte nach unten erhöht. Diese Lösung erlaubt es, ein kontrolliertes Absenken der Tischplatte mit einem ausreichend hohen (aber nicht zu hohen) Bremsmoment und gleichzeitig ein Anheben der Tischplatte gegen ein niedrig gewähltes Gegenbremsmoment zu erreichen. Dadurch werden der Energieverbrauch und der Bremsverschleiß reduziert. Gleichzeitig kann die Leistung des Antriebssystems zum Verstellen der Tischplatte geringer gewählt werden als im Stand der Technik, da beim Anheben der Tischplatte kein großes Gegenbremsmoment überwunden werden muss.

### Kurze Beschreibung der Zeichnungen

Weitere Vorteile, Ziele und Eigenschaften der Erfindung werden anhand nachfolgender Beschreibung und anliegender Zeichnungen erläutert, in welchen beispielhaft erfindungsgemäße Gegenstände dargestellt sind. Merkmale, welche in den Figuren wenigstens im Wesentlichen hinsichtlich ihrer Funktion übereinstimmen, können hierbei mit gleichen Bezugszeichen gekennzeichnet sein, wobei diese Merkmale nicht in allen Figuren beziffert und erläutert sein müssen.
Figur 1 zeigt einen Längsschnitt durch eine Ausführungsform eines erfindungsgemäßen Antriebssystems;
Figur 2 zeigt eine Detailansicht der Bremsvorrichtung des Antriebssystems der Figur 1;
Figur 3 zeigt einen möglichen Verlauf des Bremsmoments und des Gegenbremsmoments in einer Ausführungsform einer erfindungsgemäßen Bremsvorrichtung;
Figur 4 zeigt einen anderen möglichen Verlauf des Bremsmoments und des Gegenbremsmoments in einer weiteren Ausführungsform einer erfindungsgemäßen Bremsvorrichtung.

### Fig.1

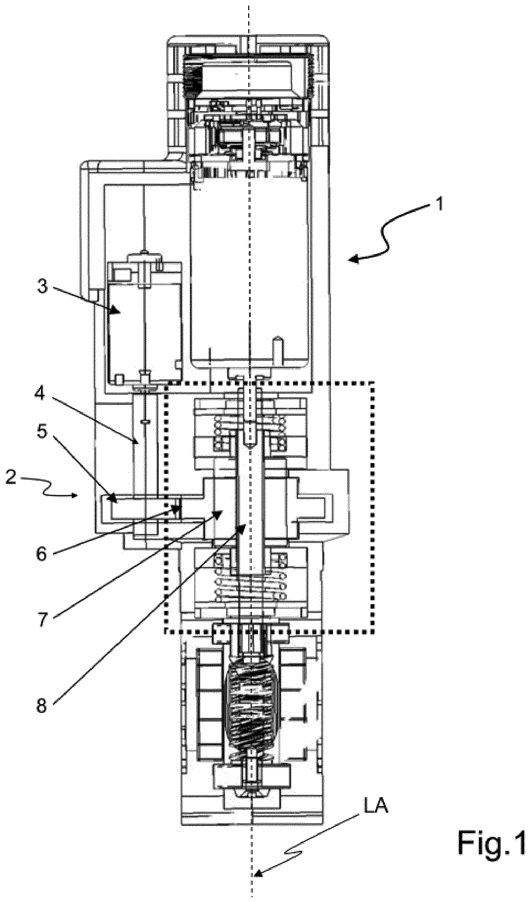

Figur 1 zeigt einen Längsschnitt durch eine Ausführungsform eines erfindungsgemäßen Antriebssystems 1 umfassend eine Bremsvorrichtung 2. Das Antriebssystem 1 ist zum Antrieb einer Drehbewegung einer Welle 8 in einer Drehrichtung und/oder in einer der Drehrichtung entgegengesetzten Gegendrehrichtung um ihre Längsachse LA ausgelegt. Das dargestellte Antriebssystem 1 umfasst eine erfindungsgemäße Bremsvorrichtung 2 zum Abbremsen einer Drehbewegung der Welle 8 in der Drehrichtung und in der Gegendrehrichtung.

Die Bremsvorrichtung 2 umfasst beispielsweise einen Bremsmoment-Einstellantrieb 3. Der Bremsmoment-Einstellantrieb 3 treibt beispielsweise über ein selbsthemmendes Getriebe eine Verschiebung einer Verbindungsvorrichtung 7 entlang der Längsachse LA an, um das Bremsmoment und/oder das Gegenbremsmoment der Bremsvorrichtung 2 einzustellen. Das selbsthemmende Getriebe umfasst beispielsweise ein Antriebsstirnrad 5 und ein Hauptstirnrad 6.

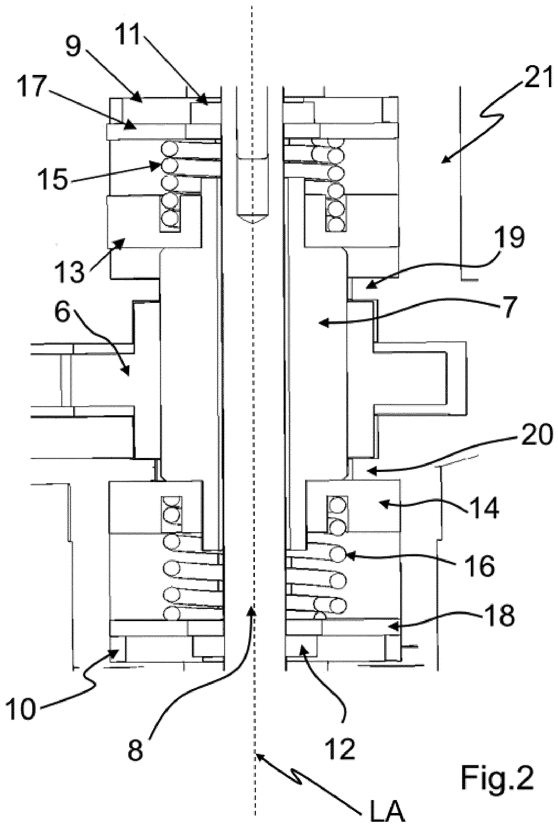

Insbesondere kann der Bremsmoment-Einstellantrieb 3 dazu ausgelegt sein, mit einer Einstellwelle 4 ein Antriebsstirnrad 5 anzutreiben, über das ein Hauptstirnrad 6 angetrieben wird. Das Hauptstirnrad 6 kann seinerseits dazu ausgelegt sein, ein selbsthemmendes Steigungsgewinde in seinem Inneren zu drehen, um über ein Gegengewinde auf der, beispielsweise hülsenförmigen, Verbindungsvorrichtung 7 die Verbindungsvorrichtung 7 entlang der Längsachse LA zu verschieben., Dies wird im Detail in Fig.2 mit Bezug auf den Bereich innerhalb des gepunkteten Rechtecks erläutert.

### Fig.2

Figur 2 zeigt eine Detailansicht eines Teils der Bremsvorrichtung 2 des Antriebssystems 1 der Figur 1. Die Bremsvorrichtung 2 umfasst beispielsweise je eine auf der Welle 8 angebrachte Bremsscheiben 9 und Gegenbremsscheibe 10. Die Bremsscheib 9 und Gegenbremsscheibe 10 sind vorzugsweise über einen Freilauf 11 und einen Gegenfreilauf 12 mit zueinander gegenläufiger Freilaufrichtung mit der Welle verbunden. Damit wird je nach Drehrichtung der Welle 8 um ihre Längsachse LA immer nur entweder die Bremsscheibe 9 oder die Gegenbremsscheibe 10 über ihren Freilauf 11 oder Gegenfreilauf 12 mit der Welle 8 mitgedreht.

Die Verbindungsvorrichtung 7 welche mittels des Bremsmoment-Einstellantriebs entlang der Längsachse LA verschieblich ist, kann beispielsweiseeiner Federabstützung 13 und einer Gegenfederabstützung 14 so entlang der Längsachse LA verschieben, dass die Spannung(en) einer zwischen der Verbindungsvorrichtung und eine Anlaufscheibe 17 angeordneten Feder 15 und/oder einer zwischen der Verbindungsvorrichtung 7 und einer Gegenanlaufscheibe 18 angeordneten Gegenfeder 16 eingestellt werden kann.

Durch die Einstellung der Spannung(en) lassen sich die zur Erzeugung des Bremsmoments und/oder Gegenbremsmoments nötigen Anpressdrücke der in einem Gehäuse 21 der Bremsvorrichtung 2 drehgehemmt angeordneten Anlaufscheibe 17 und/oder Gegenanlaufscheibe 18 auf die zugehörige Bremsscheibe 9 und/oder Gegenbremsscheibe 10 variieren. Es kommt somit zu einem veränderbaren Bremsmoment und Gegenbremsmoment auf die Welle 8.

Ein Anschlag 19 und/oder ein Gegenanschlag 20 kann jeweils den maximalen Abstand der Federabstützungen 13 von der Anlaufscheibe 17 und/oder der Gegenfederabstützung 14 von der Gegenanlaufscheibe 18 begrenzen, sodass ein minimales Bremsmoment und/oder Gegenbremsmoment vordefiniert werden kann, das nicht unterschritten werden kann, selbst wenn sich die Verbindungsvorrichtung 7 weiter von der Anlaufscheibe 17 oder Gegenanlaufscheibe 18 entfernt (und gegebenenfalls nicht mehr an der Federabstützung 13 oder Gegenfederabstützung 14 anliegt). Der Anschlag 19 und/oder Gegenanschlag 20 sind beispielsweise Teil des Gehäuses 21, es sind aber auch andere Ausgestaltungen denkbar.

### Fig.3

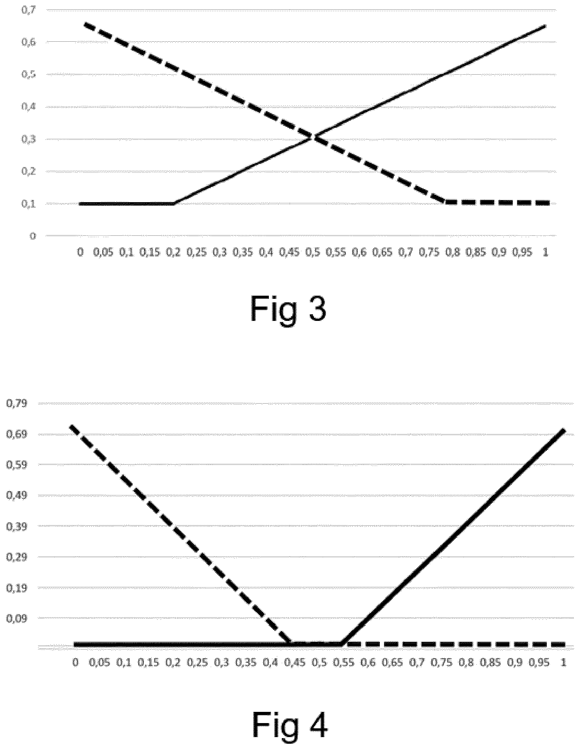

Figur 3 zeigt einen möglichen Verlauf des Bremsmoments (durchgezogene Linie) und des Gegenbremsmoments (gestrichelte Linie) für die beiden Bewegungsrichtungen der Welle 8 in einer Ausführungsform einer erfindungsgemäßen Bremsvorrichtung 2. Es sind hier und in Figur 4 jeweils das Bremsmoment und das Gegenbremsmoment (y-Achse) beispielsweise in Nm gegen eine Position (x-Achse) der Verbindungsvorrichtung 7 relativ zu einer Verschiebungsstrecke der Verbindungsvorrichtung 7 entlang der Längsachse LA aufgetragen. 0 bzw. 1 bedeutet dabei jeweils eine maximale Verschiebung der Verbindungsvorrichtung 7 in einer der beiden Richtungen (in Fig.1 oder 2 ganz nach oben oder ganz nach unten). Eine Verschiebung von 0,5 stellt jeweils eine mittige Position der Verbindungsvorrichtung 7 dar.

In dieser Ausführungsform der Figur 3 ist für beide Bewegungsrichtungen jeweils ein minimales Bremsmoment und Gegenbremsmoment (der Größe 0,1 Nm) vordefiniert, beispielsweise über einen Anschlag 19 und einen Gegenanschlag 20. In einer mittigen Position sind beispielsweise Bremsmoment und Gegenbremsmoment gleich groß.

### Fig.4

Figur 4 zeigt einen anderen möglichen Verlauf des Bremsmoments und des Gegenbremsmoments in einer Ausführungsform einer erfindungsgemäßen Bremsvorrichtung 2. Hier ist die Bremsvorrichtung 2 so ausgestaltet, dass für jeweils einen Bereich der Verschiebungsstrecke das Bremsmoment oder das Gegenbremsmoment null ist, wobei beispielsweise um die mittige Position der Verbindungsvorrichtung 7 herum das Bremsmoment und das Gegenbremsmoment null sein können.

Dies kann beispielsweise im Vergleich zu Fig.3 dadurch erreicht werden, dass eine Länge der Verbindungsvorrichtung 7 entlang der Längsachse LA reduziert wird, sodass die Verbindungsvorrichtung 7 in jeweils einem Teilbereich der Verschiebungsstrecke entweder an der Federabstützung 13 oder an der Gegenfederabstützung 14 anliegt und in der mittigen Position weder an der Federabstützung 13 noch an der Gegenfederabstützung 14 anliegt. Es ist in dieser Ausführungsform kein Anschlag 19 oder Gegenanschlag 20 vorgesehen oder der Anschlag 19 und der Gegenanschlag 20 sind so weit von der Anlaufscheibe 17 und der Gegenanlaufscheibe 18 entfernt, dass sie keine Begrenzungswirkung für ein minimales Bremsmoment oder Gegenbremsmoment entfalten.

**Liste der Bezugszeichen**

| | | | |
|---|---|---|---|
| LA | Längsachse | 11 | Freilauf |
| 1 | Antriebssystem | 12 | Gegenfreilauf |
| 2 | Bremsvorrichtung | 13 | Federabstützung |
| 3 | Bremsmoment-Einstellantrieb | 14 | Gegenfederabstützung |
| 4 | Einstellwelle | 15 | Feder |
| 5 | Antriebsstirnrad | 16 | Gegenfeder |
| 6 | Hauptstirnrad | 17 | Anlaufscheibe |
| 7 | Verbindungsvorrichtung | 18 | Gegenanlaufscheibe |
| 8 | Welle | 19 | Anschlag |
| 9 | Bremsscheibe | 20 | Gegenanschlag |
| 10 | Gegenbremsscheibe | 21 | Gehäuse |

## Patentansprüche

1. Bremsvorrichtung (2) zum Abbremsen einer Drehbewegung einer Welle (8) um ihre Längsachse (LA), wobei die Welle (8) in einer Drehrichtung und in einer der Drehrichtung entgegengesetzten Gegendrehrichtung um die Längsachse (LA) drehbar gelagert ist,
**gekennzeichnet durch**
a) zumindest eine über einen Freilauf (11) mit der Welle (8) verbundene Bremsscheibe (9), die dazu eingerichtet ist, mit einer Anlaufscheibe (17) zur Erzeugung eines Bremsmomentes auf die Welle (8) zusammenzuwirken, wobei der Freilauf (11) die Bremsscheibe (9) bei einer Drehung der Welle (8) in der Drehrichtung mit der Welle (8) koppelt und bei einer Drehung der Welle (8) in der Gegendrehrichtung von der Welle (8) entkoppelt, und
b) zumindest eine über einen Gegenfreilauf (12) mit der Welle (8) verbundene Gegenbremsscheibe (10), die dazu eingerichtet ist, mit einer Gegenanlaufscheibe (18) zur Erzeugung eines Gegenbremsmomentes auf die Welle (8) zusammenzuwirken, wobei der Gegenfreilauf (12) die Gegenbremsscheibe (10) bei einer Drehung der Welle (8) in der Gegendrehrichtung mit der Welle (8) koppelt und bei einer Drehung der Welle (8) in der Drehrichtung von der Welle (8) entkoppelt, und
c) zumindest eine Einstellvorrichtung zur zueinander gegenläufigen Einstellung des Bremsmoments und des Gegenbremsmoments.

2. Bremsvorrichtung (2) nach Anspruch 1,
**dadurch gekennzeichnet, dass**
die Einstellvorrichtung eine Verbindungsvorrichtung (7) umfasst, wobei die Verbindungsvorrichtung (7) die Anlaufscheibe (17) mit der Gegenanlaufscheibe (18) mechanisch verbindet, und entlang einer Verbindungsachse zwischen der Bremsscheibe (9) und der Gegenbremsscheibe (10) über eine Verschiebungsstrecke verschiebbar gelagert ist.

3. Bremsvorrichtung (2) nach Anspruch 2,
**dadurch gekennzeichnet, dass**
die Verbindungsvorrichtung (7) zwischen der Anlaufscheibe (17) und der Gegenanlaufscheibe (18) angeordnet ist, wobei
a) zwischen der Verbindungsvorrichtung (7) und der Anlaufscheibe (17) eine Feder (15) zum Anpressen der Anlaufscheibe (17) an die Bremsscheibe (9) angeordnet ist und/oder
b) zwischen der Verbindungsvorrichtung (7) und der Gegenanlaufscheibe (18) eine Gegenfeder (16) zum Anpressen der Gegenanlaufscheibe (18) an die Gegenbremsscheibe (10) angeordnet ist.

4. Bremsvorrichtung (2) nach Anspruch 2 oder 3,
**dadurch gekennzeichnet, dass**
die Anlaufscheibe (17), die Gegenanlaufscheibe (18), die Bremsscheibe (9) und die Gegenbremsscheibe (10) ringförmig um die Längsachse angeordnet sind, und die Verbindungsvorrichtung (7) hülsenförmig um die Längsachse angeordnet und entlang der Längsachse verschieblich gelagert ist, wobei die Anlaufscheibe (17) und die Gegenanlaufscheibe (18) zwischen der Bremsscheibe (9) und der Gegenbremsscheibe (10) und die Verbindungsvorrichtung (7) zwischen der Anlaufscheibe (17) und der Gegenanlaufscheibe (18) angeordnet sind.

5. Bremsvorrichtung (2) nach einem der Ansprüche 2 bis 4,
**gekennzeichnet durch**
einen Bremsmoment-Einstellantrieb (3) zur Verschiebung der Verbindungsvorrichtung (7) entlang der Verbindungsachse, wobei der Bremsmoment-Einstellantrieb (3) bevorzugt über ein selbsthemmendes Getriebe (5, 6) mit der Verbindungsvorrichtung (7) mechanisch verbunden ist.

6. Bremsvorrichtung (2) nach einem der Ansprüche 2 bis 5,
**dadurch gekennzeichnet, dass**
bei einer Verschiebung der Verbindungsvorrichtung (7) in einem Bereich der Verschiebungsstrecke:
- nur eine Einstellung entweder des Bremsmoments oder des Gegenbremsmoments bewirkt wird, während das jeweils andere Moment konstant bleibt,
und / oder
- das Bremsmoment erhöht wird und gleichzeitig das Gegenbremsmoment verringert wird oder umgekehrt,
und / oder
- weder das Bremsmoment noch das Gegenbremsmomentes verändert wird.

7. Bremsvorrichtung (2) nach einem der Ansprüche 1 bis 6,
**gekennzeichnet durch**
a) einen Anschlag (19) für die Anlaufscheibe (17), wobei der Anschlag (19) ein Zusammenwirken der Anlaufscheibe (17) mit der Bremsscheibe (9) zur Erzeugung eines minimalen Bremsmoments unabhängig von einer Einstellung der Einstellvorrichtung bewirkt, und/oder
b) einen Gegenanschlag (20) für die Gegenanlaufscheibe (18), wobei der Gegenanschlag (20) ein Zusammenwirken der Gegenanlaufscheibe (18) mit der Gegenbremsscheibe (10) zur Erzeugung eines minimalen Gegenbremsmoments unabhängig von einer Einstellung der Einstellvorrichtung bewirkt.

8. Bremsvorrichtung (2) nach einem der Ansprüche 1 bis 7,
**gekennzeichnet durch**
a) eine Steuereinheit (130) zur automatischen Einstellung des Bremsmoments und/oder des Gegenbremsmoments und
b) eine Anzahl von mit der Steuereinheit (130) kommunikativ verbundenen Sensoren (140) zur Bestimmung eines in Drehrichtung oder Gegendrehrichtung auf die Welle (8) wirkenden Lastmoments.

9. Antriebssystem (1) zum Antrieb einer Drehbewegung einer Welle (8) in einer Drehrichtung und/oder in einer der Drehrichtung entgegengesetzten Gegendrehrichtung um ihre Längsachse (LA),
**dadurch gekennzeichnet, dass**
das Antriebssystem (1) zumindest eine Bremsvorrichtung (2) nach einem der Ansprüche 1 bis 8 zum Abbremsen einer Drehbewegung der Welle (8) in der Drehrichtung und in der Gegendrehrichtung umfasst.

10. Vorrichtung, insbesondere Fahrzeug oder Möbelstück, mit einem Bezugsabschnitt und einem Bewegungsabschnitt,
**gekennzeichnet durch**
a) mindestens ein Antriebssystem (1) nach Anspruch 9 zum Antrieb einer Bewegung des Bewegungsabschnitts relativ zu dem Bezugsabschnitt und
b) eine Steuereinheit zur Einstellung des von der Bremsvorrichtung (2) des Antriebssystems (1) bewirkten Bremsmoments und
c) eine Anzahl von mit der Steuereinheit kommunikativ verbundenen Sensoren zur Bestimmung eines in Drehrichtung oder Gegendrehrichtung der Welle (8) des Antriebssystems (1) auf die Welle (8) wirkenden Lastmoments.

11. Vorrichtung nach Anspruch 10,
**dadurch gekennzeichnet, dass**
die Sensoren zumindest einen Lagesensor zur Bestimmung einer Lage des Bewegungsabschnitts in einem Gravitationsfeld umfassen.

12. Verfahren zur Einstellung des von der Bremsvorrichtung (2) der Antriebsvorrichtung (1) einer Vorrichtung nach Anspruch 10 oder 11 bewirkten Bremsmoments und/oder Gegenbremsmoments durch die Steuereinheit der Vorrichtung (100),
**gekennzeichnet durch folgende Schritte:**
a) Bestimmen eines in Drehrichtung oder Gegendrehrichtung der Welle (8) des Antriebssystems (1) auf die Welle (8) wirkenden Lastmoments mit Hilfe der Sensoren der Vorrichtung,
b) Einstellen des von der Bremsvorrichtung (2) bewirkten Bremsmoment und/oder Gegenbremsmoments, sodass das Lastmoment durch das dem Lastmoment entgegenwirkende Bremsmoment oder Gegenbremsmoment der Bremsvorrichtung (2) ausgeglichen wird, wobei bevorzugt das Bremsmoment und das Gegenbremsmoment gegenläufig zueinander eingestellt werden.

## Claims

1. Brake device (2) for braking a rotational movement of a shaft (8) about the longitudinal axis (LA) thereof, wherein the shaft (8) is mounted so as to be rotatable about the longitudinal axis (LA) in a direction of rotation and in a counter direction of rotation which opposes the direction of rotation,
**characterised by**
a) at least one brake disc (9) which is connected to the shaft (8) by means of a free wheel (11) and which is designed to cooperate with a thrust washer (17) in order to generate a braking torque on the shaft (8), wherein the free wheel (11) couples the brake disc (9) to the shaft (8) in the event of a rotation of the shaft (8) in the direction of rotation, and decouples it from the shaft (8) in the event of a rotation of the shaft (8) in the counter direction of rotation, and
b) at least one counter brake disc (10) which is connected to the shaft (8) by means of a counter free wheel (12) and which is designed to cooperate with a counter thrust washer (18) in order to generate a counter braking torque on the shaft (8), wherein the counter free wheel (12) couples the counter brake disc (10) to the shaft (8) in the event of a rotation of the shaft (8) in the counter direction of rotation, and decouples it from the shaft (8) in the event of a rotation of the shaft (8) in the direction of rotation, and
c) at least one setting device for setting the braking torque and the counter braking torque in a mutually opposing manner.

2. Brake device (2) according to claim 1,
**characterised in that**
the setting device comprises a connection device (7), wherein the connection device (7) mechanically connects the thrust washer (17) to the counter thrust washer (18), and is arranged so as to be displaceable along a connection axis, between the brake disc (9) and the counter brake disc (10), over a displacement path.

3. Brake device (2) according to claim 2,
**characterised in that**
the connection device (7) is arranged between the thrust washer (17) and the counter thrust washer (18), wherein
a) a spring (15) for pressing the thrust washer (17) onto the brake disc (9) is arranged between the connection device (7) and the thrust washer (17), and/or
a) a counter spring (16) for pressing the counter thrust washer (18) onto the counter brake disc (10) is arranged between the connection device (7) and the counter thrust washer (18).

4. Brake device (2) according to either claim 2 or claim 3,
**characterised in that**
the thrust washer (17), the counter thrust washer (18), the brake disc (9) and the counter brake disc (10) are arranged annularly around the longitudinal axis, and the connection device (7) is arranged in a sleeve-like manner around the longitudinal axis and is mounted so as to be displaceable along the longitudinal axis, wherein the thrust washer (17) and the counter thrust washer (18) are arranged between the brake disc (9) and the counter brake disc (10), and the connection device (7) is arranged between the thrust washer (17) and the counter thrust washer (18).

5. Brake device (2) according to any of claims 2 to 4,
**characterised by**
a braking torque adjustment drive (3) for displacing the connection device (7) along the connection axis, wherein the braking torque adjustment drive (3) is preferably mechanically connected to the connection device (7) by means of a self-locking gear (5, 6).

6. Brake device (2) according to any of claims 2 to 5,
**characterised in that**
in the case of a displacement of the connection device (7) in a region of the displacement path:
- only setting either of the braking torque or of the counter braking torque is brought about, while the respective other torque remains constant,
and/or
- the braking torque is increased and the counter braking torque is simultaneously reduced, or vice versa,
and/or
- neither the braking torque nor the counter braking torque is changed.

7. Brake device (2) according to any of claims 1 to 6,
**characterised by**
a) a stop (19) for the thrust washer (17), wherein the stop (19) brings about cooperation of the thrust washer (17) with the brake disc (9) for generating a minimum braking torque independently of a setting of the setting device, and/or
b) a counter stop (20) for the counter thrust washer (18), wherein the counter stop (20) brings about cooperation of the counter thrust washer (18) with the counter brake disc (10) for generating a minimum counter braking torque independently of a setting of the setting device.

8. Brake device (2) according to any of claims 1 to 7,
**characterised by**
a) a control unit (130) for automatic setting of the braking torque and/or of the counter braking torque, and
b) a number of sensors (140) which are connected communicatively to the control unit (130), for determining a load torque acting on the shaft (8) in the direction of rotation or counter direction of rotation.

9. Drive system (1) for driving a rotational movement of a shaft (8), about the longitudinal axis (LA) thereof, in a direction of rotation and/or in a counter direction of rotation opposite the direction of rotation,
**characterised in that**
the drive system (1) comprises at least one brake device (2) according to any of claims 1 to 8 for braking a rotational movement of the shaft (8) in the direction of rotation and in the counter direction of rotation.

10. Device, in particular vehicle or item of furniture, comprising a reference portion and a movement portion,
**characterised by**
a) at least one drive system (1) according to claim 9, for driving a movement of the movement portion relative to the reference portion, and
b) a control unit for setting the braking torque brought about by the brake device (2) of the drive system (1), and
c) a number of sensors which are connected communicatively to the control unit, for determining a load torque acting on the shaft (8) in the direction of rotation or counter direction of rotation of the shaft (8) of the drive system (1).

11. Device according to claim 10,
**characterised in that**
the sensors comprise at least one position sensor for determining a position of the movement portion in a gravitational field.

12. Method for setting the braking torque and/or counter braking torque brought about by the brake device (2) of the drive device (1) of a device according to either claim 10 or claim 11, using the control unit of the device (100),
**characterised by** the following steps:
a) determining, by means of the sensors of the device, a load torque acting on the shaft (8) in the direction of rotation or counter direction of rotation of the shaft (8) of the drive system (1),
b) setting the braking torque and/or counter braking torque brought about by the brake device (2), such that the load torque is balanced by the braking torque or the counter braking torque of the brake device (2) that counteracts the load torque, wherein the braking torque and the counter braking torque are preferably set in a mutually opposing manner.

## Revendications

1. Dispositif de freinage (2) pour freiner un mouvement de rotation d'un arbre (8) autour de son axe longitudinal (LA), l'arbre (8) étant monté à rotation autour de l'axe longitudinal (LA) dans un sens de rotation et dans un sens de contre-rotation opposé au sens de rotation,
**caractérisé par**
a) au moins un disque de frein (9) relié à l'arbre (8) par l'intermédiaire d'une roue libre (11), le disque de frein (9) étant conçu pour coopérer avec un disque de butée (17) pour générer un couple de freinage sur l'arbre (8), la roue libre (11) accouplant le disque de frein (9) à l'arbre (8) lors d'une rotation de l'arbre (8) dans le sens de rotation et le désaccouplant de l'arbre (8) lors d'une rotation de l'arbre (8) dans le sens de contre-rotation, et
b) au moins un disque de frein conjugué (10) relié à l'arbre (8) par l'intermédiaire d'une roue libre conjuguée (12), le disque de frein conjugué (10) étant conçu pour coopérer avec un disque de butée conjugué (18) pour produire un couple de contre-freinage sur l'arbre (8), la roue libre conjuguée (12) accouplant le disque de frein conjugué (10) à l'arbre (8) lors d'une rotation de l'arbre (8) dans le sens de contre-rotation et le désaccouplant de l'arbre (8) lors d'une rotation de l'arbre (8) dans le sens de rotation, et
c) au moins un dispositif de réglage pour régler le couple de freinage et le couple de contre-freinage en sens inverse l'un de l'autre.

2. Dispositif de freinage (2) selon la revendication 1,
**caractérisé en ce que**
le dispositif de réglage comprend un dispositif de liaison (7), le dispositif de liaison (7) reliant mécaniquement le disque de butée (17) au disque de butée conjugué (18), et étant monté de façon déplaçable le long d'un axe de liaison entre le disque de frein (9) et le disque de frein conjugué (10) sur un trajet de déplacement.

3. Dispositif de freinage (2) selon la revendication 2,
**caractérisé en ce que**
le dispositif de liaison (7) est disposé entre le disque de butée (17) et le disque de butée conjugué (18),
a) un ressort (15) étant disposé entre le dispositif de liaison (7) et le disque de butée (17) pour presser le disque de butée (17) contre le disque de frein (9) et/ou
b) un ressort conjugué (16) étant disposé entre le dispositif de liaison (7) et le disque de butée conjugué (18) pour presser le disque de butée conjugué (18) contre le disque de frein conjugué (10).

4. Dispositif de freinage (2) selon la revendication 2 ou 3,
**caractérisé en ce que**
le disque de butée (17), le disque de butée conjugué (18), le disque de frein (9) et le disque de contre conjugué (10) sont disposés en forme d'anneau autour de l'axe longitudinal, et le dispositif de liaison (7) est disposé en forme de douille autour de l'axe longitudinal et est logé de manière à pouvoir se déplacer le long de l'axe longitudinal, le disque de butée (17) et le disque de butée conjugué (18) étant disposés entre le disque de frein (9) et le disque de frein conjugué (10) et le dispositif de liaison (7) étant disposé entre le disque de butée (17) et le disque de butée conjugué (18).

5. Dispositif de freinage (2) selon l'une des revendications 2 à 4,
**caractérisé par**
un entraînement de réglage du couple de freinage (3) pour déplacer le dispositif de liaison (7) le long de l'axe de liaison, l'entraînement de réglage du couple de freinage (3) étant de préférence relié mécaniquement au dispositif de liaison (7) par un engrenage autobloquant (5, 6).

6. Dispositif de freinage (2) selon l'une quelconque des revendications 2 à 5,
**caractérisé en ce que,**
lors d'un déplacement du dispositif de liaison (7) dans une zone du trajet de déplacement:
- on ne provoque qu'un réglage soit du couple de freinage, soit du couple de contre-freinage, l'autre couple restant constant,
et/ou
- on augmente le couple de freinage tout en diminuant le couple de contre-freinage ou inversement,
et/ou
- on ne modifie ni le couple de freinage, ni le couple de contre-freinage.

7. Dispositif de freinage (2) selon l'une des revendications 1 à 6,
**caractérisé par**
a) une butée (19) pour le disque de butée (17), la butée (19) provoquant une coopération du disque de butée (17) avec le disque de frein (9) pour produire un couple de freinage minimal indépendamment d'un réglage du dispositif de réglage, et/ou
b) une butée conjuguée (20) pour le disque de butée conjugué (18), la butée conjuguée (20) provoquant une coopération du disque de butée conjugué (18) avec le disque de frein conjugué (10) pour produire un couple de contre-freinage minimal indépendamment d'un réglage du dispositif de réglage.

8. Dispositif de freinage (2) selon l'une des revendications 1 à 7,
**caractérisé par**
a) une unité de commande (130) pour le réglage automatique du couple de freinage et/ou du couple de contre-freinage et
b) un nombre de capteurs (140) reliés de manière communicative à l'unité de commande (130) pour déterminer un couple de charge agissant sur l'arbre (8) dans le sens de rotation ou dans le sens de contre-rotation.

9. Système d'entraînement (1) pour entraîner un mouvement de rotation d'un arbre (8) autour de son axe longitudinal (LA) dans un sens de rotation et/ou dans un sens de contre-rotation opposé au sens de rotation,
**caractérisé en ce que**
le système d'entraînement (1) comprend au moins un dispositif de freinage (2) selon l'une des revendications 1 à 8 pour freiner un mouvement de rotation de l'arbre (8) dans le sens de rotation et dans le sens de contre-rotation.

10. Dispositif, en particulier véhicule ou meuble, comprenant une section de référence et une section de déplacement,
**caractérisé par**
a) au moins un système d'entraînement (1) selon la revendication 9 pour entraîner un mouvement de la section de mouvement par rapport à la section de référence et
b) une unité de commande pour régler le couple de freinage provoqué par le dispositif de freinage (2) du système d'entraînement (1) et
c) un nombre de capteurs reliés de manière communicative à l'unité de commande pour déterminer un couple de charge agissant sur l'arbre (8) dans le sens de rotation ou le sens inverse de l'arbre (8) du système d'entraînement (1).

11. Dispositif selon la revendication 10,
**caractérisé en ce que**
les capteurs comprennent au moins un capteur d'orientation pour déterminer une orientation de la section de mouvement dans un champ gravitationnel.

12. Procédé de réglage du couple de freinage et/ou du couple de contre-freinage provoqué par le dispositif de freinage (2) du dispositif d'entraînement (1) d'un dispositif selon la revendication 10 ou 11, par l'unité de commande du dispositif (100),
**caractérisé par les étapes suivantes :**
a) détermination d'un couple de charge agissant sur l'arbre (8) dans le sens de rotation ou dans le sens de contre-rotation de l'arbre (8) du système d'entraînement (1) à l'aide des capteurs du dispositif,
b) réglage du couple de freinage et/ou du couple de contre-freinage provoqué par le dispositif de freinage (2), de sorte que le couple de charge est compensé par le couple de freinage ou le couple de contre-freinage du dispositif de freinage (2) agissant à l'encontre du couple de charge, le couple de freinage et le couple de contre-freinage étant de préférence réglés en sens inverse l'un de l'autre.
